(19) **Europäisches Patentamt / European Patent Office / Office européen des brevets**

(11) **EP 2 640 082 B1**

(12) **EUROPEAN PATENT SPECIFICATION**

(45) Date of publication and mention
of the grant of the patent:
**18.11.2015 Bulletin 2015/47**

(51) Int Cl.:
*H04N 21/418* *(2011.01)*    *H04N 21/61* *(2011.01)*
*H04N 21/643* *(2011.01)*    *H04N 21/438* *(2011.01)*
*H04N 21/43* *(2011.01)*    *H04L 29/06* *(2006.01)*

(21) Application number: **12159791.8**

(22) Date of filing: **16.03.2012**

(54) **A processing module for injecting a digital media transport stream into a host device**

Verarbeitungsmodul zur Injektion eines digitalen Medienübertragungsstroms auf eine Host-Vorrichtung

Module de traitement pour injecter un flux de transport multimédia numérique dans un dispositif hôte

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.09.2013 Bulletin 2013/38**

(73) Proprietor: **SmarDTV S.A.**
**1033 Cheseaux-sur-Lausanne (CH)**

(72) Inventor: **Deprez, Olivier**
**13600 La Ciotat (FR)**

(74) Representative: **Leman Consulting S.A.**
**Chemin de Précossy 31**
**1260 Nyon (CH)**

(56) References cited:
**EP-A1- 2 026 558**       **EP-A2- 2 020 800**
**WO-A1-2012/029018**

- **IRAJ SODAGAR: "The MPEG-DASH Standard for Multimedia Streaming Over the Internet", IEEE MULTIMEDIA, IEEE SERVICE CENTER, NEW YORK, NY, US, vol. 18, no. 4, 1 April 2011 (2011-04-01), pages 62-67, XP011378371, ISSN: 1070-986X, DOI: 10.1109/MMUL.2011.71**
- **"MPEG transport stream", , 18 July 2010 (2010-07-18), pages 1-8, XP55010297, Retrieved from the Internet: URL:http://en.wikipedia.org/w/index.php?ti tle=MPEG_transport_ stream&oldid=374152729 [retrieved on 2011-10-24]**
- **PANTOS R: "HTTP Live Streaming", INTERNET CITATION, 8 June 2009 (2009-06-08), pages 1-17, XP002555827, Retrieved from the Internet: URL: http://tools.ietf.org/html/draft-panto s-http-live-streaming-01 [retrieved on 2009-06-08]**
- **ALEXANDER M ET AL: "CIplus-Standard und neue Anwendungsmöglichkeiten", FKT FERNSEH UND KINOTECHNIK, FACHVERLAG SCHIELE & SCHON GMBH., BERLIN, DE, vol. 64, no. 8-9, 1 August 2010 (2010-08-01), pages 424-429, XP001558110, ISSN: 1430-9947**

**Description**

**TECHNICAL DOMAIN**

The present invention pertains to the domain of digital media streaming, especially adaptive streaming. The invention is intended to be used in a digital television environment as opposed to a computer environment, and can be deployed in digital TV systems used in the processing of either encrypted or non-encrypted digital media.

**STATE OF THE ART**

With so much digital television content becoming available over the Internet, digital television sets adapted to be able to pull such content from the Internet are now becoming available.

The internet is also used to deliver many types of content which is playable using devices other than digital televisions, some such devices being specially adapted to cater for particular techniques which are known to be used to deliver some of the different types of media. Providers of digital content who make such content available over the internet may do so using so called adaptive streaming techniques whereby a single piece of content may be encoded several times at different bit-rates and stored in multiple files in order for a client to be able to select from which file to receive the content, depending on the currently available bandwidth of the reception channel. Adaptive streaming techniques allow for the client to select a new bit-rate at predetermined positions within a transmission according to fluctuations in available bandwidth during delivery of a piece of content. In order to facilitate this it is usual for the files corresponding to the different bit-rates to be split into a number of chunks in such a way that chunk boundaries are aligned for all of the files. Other generally accepted names for chunks are segments or fragments.

However, HTTP adaptive streaming, as this technique is called, although known to be employed within the industry, is not yet subject to any standardisation. Although there have been some initiatives in that direction, for example with MPEG-DASH (MPEG data by Dynamic Adaptive Streaming Over HTTP), there is still a level of uncertainty within the industry as to which standard will become the most widely adopted.

For example, there is an increasing tendency for developers to develop HTTP adaptive streaming solutions based on the Apple HTTP Live Streaming (HLS) format, which essentially still uses containers complying with the MPEG2-TS format.

In the context of adaptive streaming, the term "container", as used above, simply refers to a storage unit for audio/video media data intended to be delivered by streaming techniques. The container may comprise audio data, video data, subtitle data and metadata. Metadata includes data which describes the payload of the container or timestamps for example. Containers may adhere to any of the known container formats such as MPEG2 transport stream format or MP4/Quicktime, ASF, Smooth Streaming, Live Streaming or H.264/AVC. Other formats widely used for transmitting MPEG data by Dynamic Adaptive Streaming Over HTTP otherwise known as DASH or MPEG DASH. Developers of streaming clients may refer to the various specifications which exist in the domain, such as the ISO Base Media File Format, as specified in ISO/IEC 14496-14, otherwise known as ISOMBFF.

Methods for achieving distribution of content via media-over-HTTP streaming technology are disclosed in Indian Patent Application Number 2145/CHE2011 (Official Journal No. 27/2011, Indian Patent Office). In order to avoid discontinuities in the quality of video received during streaming due to variations in available bandwidth during the transmission, this document proposes the use of adaptive streaming techniques whereby chunks, segments or fragments of content are prepared at a number of different qualities and stored for delivery over HTTP. The amount of available bandwidth is monitored during the delivery and this awareness is used to control the selection of which particular quality of chunks, segments or fragments of media are delivered at a particular time.

This technique allows for better file-handling capabilities of the potentially very high number of files of various qualities by taking into account the inter-relationship between the files and caching them within a network of intermediate servers. However this document does not disclose any solution to particular problems related to the use of such adaptive streaming techniques within a TV broadcast context. Neither does this document disclose any particular considerations related to problems which arise in the context of conditional access to content.

It is worth noting at this point that the term "file", as used in the present application, may refer equally to entire content files, one or more chunks, fragments or segments from a content file.

United States Patent Application Publication number 2011/0019976A1: "ADAPTIVE STREAMING FOR DIGITAL CONTENT DISTRIBUTION" gives an example of how to implement HTTP adaptive streaming capability into a media player for a chosen HTTP adaptive streaming technology. A digital TV reception apparatus manufacturer, seeking perhaps to increase his market share, who decides to incorporate HTTP adaptive streaming technology in his reception apparatus would find himself at a disadvantage should he try to follow the teaching of this document by including such technology in his apparatus. Indeed, if the market were to change in favour of another type of streaming technology other than the one targeted by the TV manufacturer, requiring different technology to be incorporated into the reception apparatus, then significant reinvestment may then become necessary for the cost of re-tooling, over and above the wasted investment on the first design and the related inventory.

European Patent Application Publication number 2,026,558 describes a transcoder module for converting audio/video content from one format to another. The transcoder module is connected to a digital television receiver/decoder via a PCMCIA interface operating according to a DVB-CI standard. The interface comprises a transport stream interface and a command interface. The document addresses a problem whereby the command interface is too slow to allow a rich OSD (On-Screen-Display) to be manipulated on the host device. A solution is offered whereby instead of using the command interface to send commands to manipulate the OSD on the receiver/decoder (host), an application is run on the transcoder to generate the rich OSD and to convert it into data packets which are then multiplexed onto the transport stream along with the content and sent to the receiver/decoder via the transport stream interface. In this mode of operation the document teaches synchronisation of the transcoded video stream with the input multiplexed signal before returning the output multiplexed signal to the television receiver/decoder. According to the document, this synchronisation is achieved through the use of a buffer having as input a demultiplexed version of the input multiplexed signal and with its output going to a multiplexer which feeds the transport stream back to the television receiver/decoder to perform a simple swap of transcoded content at positions where corresponding non-transcoded input was received.

Apart from the main problem addressed by the document, an example is given in the document wherein the transcoder module is adapted to act as a reception apparatus for receiving a broadcast television signal. In this configuration, the transcoder module is no longer used for transcoding. Instead the module is used to receive broadcast television signals over a mode of delivery for which the television receiver/decoder is not adapted to handle. The television content is then sent to the television receiver/decoder via the transport stream interface. The module thereby becomes an adapter module to allow the television to display television content delivered by a means for which the television is not configured to operate. In this mode and for the described application, synchronisation is not a problem and therefore no instruction is given as to how to properly synchronise the content received by the module when transferring the content via the transport interface in this particular mode of operation.

International Patent Application Publication number 2012/029018 A1 discloses a system for obtaining audio/video data from a Wide Area Network (WAN), such as The Internet, the system comprising a CI+ CAM coupled to the WAN via an Ethernet connection, using a browser. The browser receives a connection parameter file from the CI+ CAM, thereby allowing the CAM to receive a program list from the WAN. A user can select a program from the program list, thereby allowing him to download the selected program from the WAN. This publication teaches that the functionality of a CI+ CAM can be extended to allow a TV, configured to receive broadcast content via RF means, to be used to receive content via The Internet instead of having to use a dedicated, specially adapted, set-top box. The publication however does not contemplate adaptive streaming or any of the associated problems which may arise in the domain of adaptive streaming.

## BRIEF SUMMARY OF THE INVENTION

In view of the uncertainty within the industry as to which standard will be adopted for achieving adaptive streaming over HTTP, there is understandably a reluctance for digital TV manufacturers to incorporate hardware and software, on an industrial scale, capable of taking advantage of the possibilities afforded by adaptive streaming over HTTP techniques. The investment in incorporating such features in a standard digital TV is high enough to dissuade the manufacturers from doing so, lest the market subsequently tend towards a standard other than the one the manufacturer chose to incorporate. The present invention provides a way to let digital TV manufacturers take advantage of adaptive streaming over HTTP, whereby their standard equipment may be used to access such services. According to other embodiments of the present invention, such standard equipment comprising readily achievable cost effective adaptations may be used to access services provided through HTTP adaptive streaming techniques.

For example, it is known for some developers to favour adaptive streaming solutions based on the Apple HTTP Live Streaming format (HLS). Whereas digital TV sets are not configured with an embedded Apple HLS client, for the reasons mentioned above. It is a goal of the present invention to implement this type of functionality onto a conditional access module, particularly one complying with a Common Interface Standard (CICAM). This is advantageous as the CICAM provides a standard interface between a CAM and a digital TV apparatus and many digital TVs are now configured to be a host to such CICAMs. The CICAM is cheaper to manufacture and problems related to inventory are easier to deal with. In this way a standard TV reception apparatus, with or without small adaptations as mentioned above, cooperating with a CICAM according to an embodiment of the present invention, can be used to receive HTTP adaptive streaming content.

Although adaptive streaming techniques are known in the state of the art it is not apparent how to use a CICAM to incorporate such functionality in order to serve as an appropriate interface to the digital TV. To this end, the present invention provides the capability of having a CICAM pull segments of content from a content database according to a given streaming specification, for example pulling segments from the cloud according to the Apple HLS Client Specifications. The CICAM then injects the thus obtained segments, in MPEG2-TS (transport stream) format for example, into a standard CI+ Host device (the digital TV for example) over the CI+ Link Protection interface. According to one embodiment of the invention, the segments are streamed from the database in the clear (unencrypted format), whereas according to another embodiment, the segments are streamed in encrypted format and decrypted in the CICAM before being injected in the clear to the host device, nonetheless "protected" by the CI+ Link Protection. According to the state of the art, the host device generally receives the transport stream, which is then transferred to the CICAM, whereas according to the invention the transport stream is injected directly to the host from the CICAM, the CICAM being responsible for generating the transport stream from the content database via HTTP adaptive streaming.

It is to be understood that in the context of this description the content database could be "the cloud" or a repository on a server for example. The terms streaming source and IP network are also used throughout the document to refer to a content database.

In order to achieve the goals of the present invention, according to a first aspect, there is provided a processing module for injecting a digital media transport stream into a host device for receiving and decoding the transport stream, via a communication channel comprising a transport stream interface, the processing module comprising:

an adaptive streaming module for receiving at least one segment of digital content encoded according to an internet protocol, the segment comprising a plurality of data packets of the digital content encoded at one from a plurality of encoding bit-rates;
a parser to parse the received segment for at least one timing attribute associated with a subset of the data packets; and
a transport stream injector to inject the transport stream comprising at least the subset of data packets into the transport stream interface;
**characterised in that**:
the processing module further comprises a PCR clock for keeping track of a reference time and in that the transport stream injector is configured to begin transmitting the subset of data packets at an injection time, the injection time based on a comparison between the timing attribute and the reference time, the transmission being carried out at an injection bit-rate which is higher than any from the plurality of encoding bit-rates.

According to a second aspect, there is provided a method for injecting a transport stream (TS) comprising a plurality of data packets into a transport stream interface using a processing module (CICAM) according to the one described above, comprising:

parsing at least one segment of the content, the segment comprising a plurality of data packets of the content encoded at one from a plurality of encoding bit-rates, for at least one timing attribute, the timing attribute being associated with a subset from the plurality of data packets;
transmitting the subset of data packets, the transmission beginning at a time based on a comparison between the timing attribute and the reference time and at an injection bit-rate which is higher than any from the plurality of encoding bit-rates.

## BRIEF DESCRIPTION OF THE DRAWINGS

The present invention will be better understood thanks to the detailed description which follows and the accompanying drawings, which are given as nonlimiting examples of embodiments of the invention, namely:

Figure 1, which shows a system in which an embodiment of the present invention may be deployed;
Figure 2, showing a series of data packets to be processed by a system in which an embodiment of the present invention is deployed;
Figure 3, illustrating a graph of time vs. data packet injection bit-rate which may be observed in a system in which an embodiment of the present invention may be deployed; and
Figure 4, which shows a system in which one at least one of the goals of the present invention may be achieved with the added pre-condition that technical intervention be carried out on the host device.

## DETAILED DESCRIPTION

The present invention allows for a standard digital TV reception device to receive digital content in the form of a transport stream, such digital content having been streamed from a streaming source using HTTP adaptive streaming techniques. According to other embodiments of the present invention, a minor adaptation to the standard TV reception device may be made in order to realise the invention. To this end there is provided a CICAM module comprising an HTTP adaptive streaming client, otherwise known as an adaptive streaming module, the CICAM module being configured to interface with the digital TV reception device via an interface complying with the Common Interface Standard known as CI+. The CICAM further comprises an internet protocol interface for receiving the digital content from an IP network using the HTTP adaptive streaming module. According to one embodiment the streaming content is received in the clear, converted into a transport stream (TS), having a transport stream format, in the CICAM and injected into the TV reception device, known as a host device in this context, the injection being done via the CI+ Link Protection Interface. According to another embodiment, the streaming content is received in encrypted format in a streaming file, decrypted in the CICAM, converted into a transport stream in the CICAM and injected into the host device via the CI+ Link Protection Interface. The host device comprises a video buffer, into which the injected transport stream is at least temporarily buffered.

When the CICAM injects the transport stream into the host device, care must be taken to make sure that such injection is done at a suitable bit-rate. By suitable it is meant at a bit-rate which is sufficient so as to make sure that the video buffer in the host device does not drift. Drifting in this context means that the video buffer progressively fills towards its maximum capacity or progressively during the course of the injection. Such drift could lead to the video buffer underflowing or overflowing, leading to video disruption. Proper regulation of the transfer of segments of content from the transport stream over the CI+ interface is therefore required. In this manner, smooth decoding of the streamed video may be achieved over time, resulting in clean video buffer regulation and no disrupted video.

As is known in the domain of digital TV reception, and defined in industry standards such as MPEG-2, a transport stream comprises a plurality of transport stream packets, each packet comprising a header and a payload, the header comprising metadata such as a packet identifier or a programme clock reference value for the packet and the payload comprising audio/video information. The programme clock reference value corresponds to time and can be associated with a packet, thus allowing for packets in a transport stream to be synchronised during playback. A group of data packets within a segment may be associated with each other in such a way that a programme clock reference value in a header of one data packet will be applicable to all of the data packets associated with that packet. The programme clock reference value can be used to allow content to be synchronised during playback so that the proper timing between packets may be maintained. The programme clock reference values therefore may therefore be referred to in general terms as synchronisation attributes, or more simply timing attributes.

According to an embodiment of the present invention, the regulation of the injection of the MPEG2-TS (transport stream) packets over the CI+ interface is achieved by synchronising the transport stream with respect to the programme clock reference; whereas according to a second embodiment of the present invention, the regulation is achieved through a flow control mechanism using feedback from the host to the CICAM based on the monitoring of the occupancy level of the video buffer.

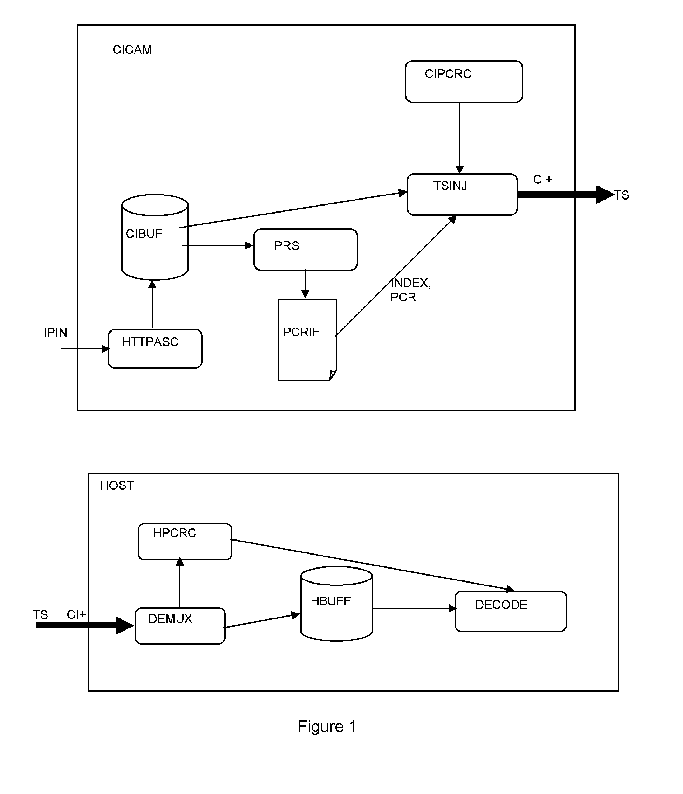

Figure 1 illustrates a system in which the mentioned embodiment of the present invention may be deployed. The system comprises a host device for playing media content, preferably audio/video content. The host device comprises a host Common Interface port configured to receive the media content via a transport stream interface, preferably compliant with a Common Interface Specification such as CI+, which is a known standard in the domain of digital TV processing. The host device further comprises a video buffer, in which it may store, at least temporarily, at least part of the received media content, and a video decoder to decode the content for playback (display in the case of video content). A suitable host could be a digital TV set.

It is worth noting that, according to known practices in the domain of streaming media data transmission, including adaptive stream and dynamic adaptive streaming, media data may be downloaded from a media server in segments or fragments. A plurality of files, representing a particular content, is stored on the media server in a format whereby each file represents a segment of that content. In more general terms however, it may occur that one file comprises more than one segment of the content. This allows for adaptive streaming to be achieved since different files can hold different versions of the same content, each version having a different quality or bit-rate of the content. The data in each of the files is split up into a number of segments such that the segment boundaries align across all of the files, so that a streaming client may switch from one file to another depending on available bandwidth for the transmission of the content, while maintaining a coherent order of segments received.

The system further comprises a processing module configured to send content via a module Common Interface port which is compatible with the Common Interface Specification i.e. CI+. The processing module is configured to be able to send a transport stream comprising the content to the host device's host Common Interface port via the CI+ transport stream interface otherwise simply known as a transport stream interface. The processing module is preferably detachable from the host device and may be connected to the host device via the transport stream interface. It is therefore convenient for the processing module to be at least based on a known module such as a Common Interface Conditional Access Module, preferably in the form of an interface card which can be removably connected to the host via a slot in the host device intended for such purposes. The processing module (CICAM) comprises an IP interface for receiving data from an IP network. The CICAM is configured to be able to receive, and preferably store, data (media content) from an IP network in the form of segment files and, when required to send content to the host, to select the appropriate segment files, and build a transport stream for transmission to the host device via the transport stream interface.

In order to properly receive the content from the IP network, the processing module (CICAM) further comprises a HTTP adaptive streaming module configured to access files of media content from a media server (otherwise known as the internet or the cloud). The HTTP adaptive streaming module is specially adapted to access the content segment by segment and to interpret the segment index file. The segment index file is a metadata file comprising information about associated segment files such as bit-rates, particular URLs of files or fragments, duration of content fragments, the number of fragments in a file, position in time of certain fragments and so on. The HTTP adaptive streaming module is configured to interpret the segment index file and thereby to pull required segments from the media server, based on which particular content is to be received and what bandwidth is available for doing so at any given time. The processing module (CICAM) further comprises a local file system (CHTSF) for buffering segments of a requested content and the HTTP adaptive streaming module is configured to download the requested content segment by segment, thanks to the segment index file, and to buffer the received segments in the local file system (CHTSF).

The processing module (CICAM), according to this embodiment of the present invention, further comprises a parser (PRS) to parse the segments of content. The segments have associated Programme Clock Reference values (PCR values) and the parser is configured to identify the PCR values found and to store them in a PCR index file (PCRIF). Each PCR value thus found is logged in the PCR index file (PCRIF) in the processing module (CICAM).

Each PCR value in the PCR index file corresponds to the position of a segment associated with that PCR value in a transport stream. In other words PCR values correspond to a sequence in which their associated segments are to be played and indeed the relative times at which they are to be displayed. As is known from the state of the art, a transport stream (TS), such as an MPEG-2 transport stream (TS) for example, comprises data packets, each data packet having a header and a payload, the payload comprising audio/video information and the header comprising metadata, including a packet identifier (PID) and the programme clock reference (PCR) among others. The PCR can therefore be used to properly schedule its associated data packet during playback.

According to the embodiment, the processing module (CICAM) further comprises a local programme clock reference or module PCR clock (CIPCRC). Thanks to the CICAM having its own PCR clock (CIPCRC), according to the embodiment, the CICAM may be configured to deliver a PCR-accurate transport stream (TS) to the host device.

Before explaining how the PCR-accurate transport stream is generated, an explanation is given as to why the PCR index file is needed. Since the segment files stored in the processing module's local file system represent content which has been obtained by a process of adaptive streaming, it is most likely that different segments came from different files. Since the segments buffered in the local file system are susceptible to have come from different files and given that different files comprise content at different bit-rates, it follows that the buffered segments may be a collection of different bit-rate encoded segments. Since PCR values logged in the PCR index file as described above may have been taken from different files (and, by definition of how an adaptive streaming process works, probably will have been taken from different files), it follows then that different quantities of data will be associated with different PCR values and so between successive PCR values in the PCR index file, different quantities of data may be associated. For example, if segment *s1,* associated with PCR value 101 time units, were to be taken from file *f1* comprising content at bit-rate *br1* and segment *s2,* associated with PCR value 102 time units, were to be taken from file *f2* comprising content at a bit-rate of *br2,* which is double the value of *br1,* then there will be twice as much data in segment *s2* than in segment *s1*. If a further segment *s3,* associated with a PCR value of 103 time units, were to be taken from another file *f3* comprising content at a bit-rate of *br3,* which is 10 times the bit-rate *br1,* then segment *s3* will have 10 times more data than segment *s1*. In other words, between PCR value 101 and PCR value 102 there is a quantity *q1* of data, while between PCR value 102 and 103 there is a quantity of data *q2,* which is double that of *q1,* and so on. It can be seen then, that for time equidistant PCRs recorded in the PCR index file, the amount of data associated with each PCR can vary. In other words the amount of data between time-equidistant PCRs may vary. The term time-equidistant is used in favour of consecutive or successive in this discussion simply to take into account a possibility that the PCR index file may not actually have consecutive PCR values in the sense that consecutive values may not exhibit equal increments. This could be due to the fact that the parser misses a PCR or otherwise excludes a PCR during parsing for example. It has been established then that the amount of data between time-equidistant PCR values in the PCR index file may vary. This is the reason why the PCR index file is required: careful consideration of how to treat the data packets which have a PCR value since it cannot be assumed in the host device that a certain quantity of data represents a certain time interval. In other words a PCR value cannot simply be calculated at the host end based on a quantity of data received and an average bit-rate for example. For content taken from only one file on the other hand (no adaptive streaming) this calculation would work of course.

In order to achieve the desired synchronisation, i.e. to build the PCR-accurate transport stream (TS) to inject to the host device, the processing module (CICAM) comprises its own PCR clock (module PCR clock) as mentioned above and further comprises a transport stream injector (TSI). The transport stream injector (TSI) successively reads the values found in the PCR index file and fetches, for each PCR value found, the corresponding data (i.e. the corresponding data packet and a number of subsequent data packets) from the segment files stored in the local file system.

The Transport stream injector then builds a transport stream from the segment files by taking the packet from the segment file corresponding to the PCR clock value, latching the processor module's PCR clock value and injecting the packet (with its PCR value) into the transport stream. Then all the subsequent packets are injected at a bit-rate of Fr, where Fr is higher than the maximum bit-rate of the segment files, until the packet associated with the next PCR value in the PCR index file is reached. The transport stream injector then compares the next PCR value with the previous one and waits for that amount of time before injecting the packet with the next PCR value and the following packets until the packet with the next PCR value is reached, and so on. All of the injections are done at the rate Fr, which is higher than the highest bit-rate which may be encountered among all of the segment files in the local file system. A PCR clock running at 27MHz is deemed to be sufficient for a processing module to carry out the procedure mentioned above.

Following the injection process as described above, it can be seen that an injection period always starts with the injection of a packet comprising a PCR value and ends with injection of the packet situated just before the next packet having a PCR value. In this way there are silent periods during which no data is available at the transport stream interface.

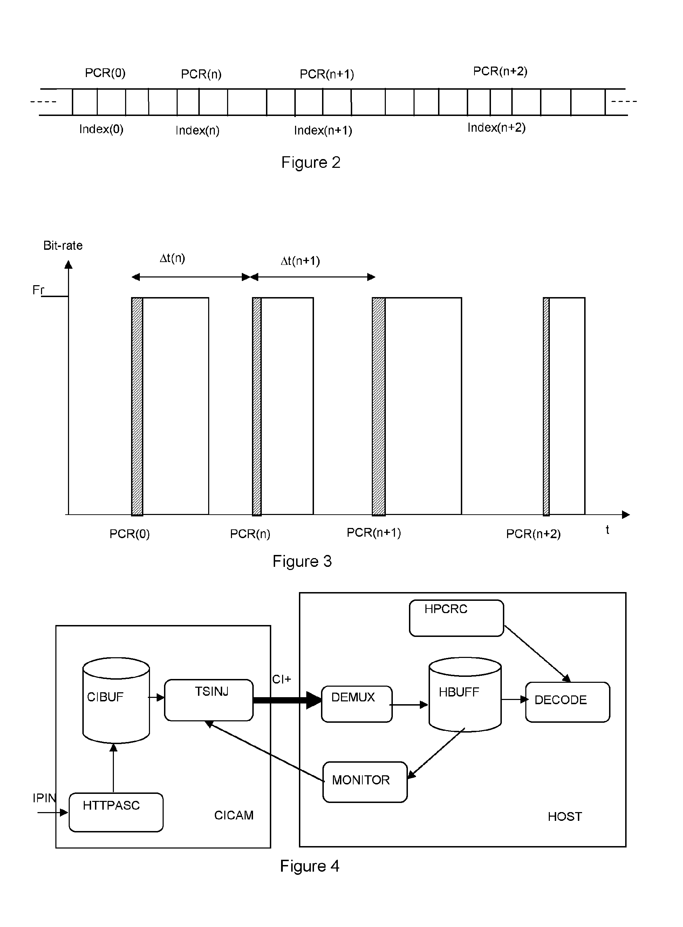

Figure 2 illustrates a series of transport stream packets, some of which are associated with a PCR value. The parser generates the PCR index file including entries index(0) (the index of the first packet from the segment files having a PCR value), corresponding to PCR value PCR(0) and subsequent entries index(n), index(n+1) and index(n+2) corresponding to the PCR values (PCR(n), PCR(n+1) and PCR(n+2). Figure 3 illustrates a graph of injection time against injection bit-rate for the indexed packets and the subsequent packets associated with each index. The graph shows the silent periods between injection bursts due to the fact that the bit-rate for the injection (Fr) is chosen to be higher than highest bit-rate of the stored segment files. During silent periods no data is injected. Referring to Figure 3, the transport stream injector finds index(0) corresponding to PCR value PCR(0) in the PCR index file, fetches the packet from the segment files with PCR(0), latches the current value of the module PCR clock and injects that packet (corresponding to PCR(0)) into the transport stream followed by all subsequent packets until the packet with the next PCR value from the PCR index file is reached (PCR(n)), at which time it stops injecting just before it gets to that packet. The injector reads the next PCR value in the PCR index file and waits until the module PCR clock has increased by the difference between the next PCR value and the first PCR value. In general, the value of the module PCR clock (ModulePCR) that the injector waits for may be expressed as:

$$ModulePCR = ModulePCR(n) + (PCR(n+1) - PCR(n))$$

With this solution, the host device receives a PCR-accurate transport stream which will decode the required video at the proper rate, thereby avoiding any positive or negative drift of the host buffer filling level and therefore avoiding overflow or underflow of the host buffer and their negative effects on continuity of playback.

The host device treats the received transport stream in the normal fashion. Indeed, the host device may be a standard host device as no modification is necessary for the host device to be able to function properly in the system according to this embodiment and variations based thereupon. The host will demultiplex the received transport stream in the normal fashion (as it does when receiving and decoding any broadcast) and will use the thus extracted PCR values to slave the host local PCR clock as illustrated in Figure 1. The host's local PCR clock is thereby adjusted using the PCR values in the transport stream coming in from the processor module. In this way the host's local PCR clock is synchronised at least to some extent to the module PCR clock i.e. whenever a transport stream comprising PCR values is being received. The host local PCR clock is used to govern the rate of video decoding in the host, as it normally would. The video elementary stream which is demultiplexed from the transport stream is stored in the host's video buffer until the decoding time (associated PCR value) according to the host local PCR clock is reached.

As mentioned before, in a system in which an embodiment of the present invention is deployed, silent periods will occur on the transport stream interface due to the fact that the transport stream injector injects packets at a bit-rate which is higher than the maximum bit-rate of the segment files. Inevitably, this leads to an effective packet rate over the transport stream interface potentially being different from the effective bit-rate of a data packet taken from a transport stream once received in the host. This may lead to jitter once the video is decoded. According to an embodiment of the present invention, in order to minimise this type of jitter or even eliminate it, the data packets are re-timed as they are injected through the transport stream interface. By re-timed it is meant that the PCR values found in the transport stream in the processing module is over-written (re-stamped) when the data packet associated with that value is injected into the transport stream interface, thus attributing an actual time, according to the module PCR clock, for the data packet. The module PCR clock is thus the master clock, imposing an actual time on the data packets in the transport stream as they leave the processing module, the actual times being properly based on the original PCR values found in the segments with respect at least to their order.

In summary, the processing module, with its parser, participates in determining which segments are pulled from the content database and when and the transport stream injector with the module PCR clock inject a PCR-accurate transport stream into the transport stream interface for the host device at a bit-rate which guarantees that a host device downstream of the transport stream interface will not experience drift and will therefore not experience the resulting video buffer overflow or underflow. The host will therefore be able to present video without disruption. The host device works in the normal fashion, as in the prior art, by synchronising its local PCR clock to the processing module's PCR clock using the PCR values found in the received transport stream. The host's PCR clock is used to regulate the decoding of the received video content.

A particular PCR value in the PCR index file indicated to the processing module that all data associated with that PCR value and up to the next PCR value must be delivered by the time indicated in the next PCR value. The transport stream injector injects data into the transport stream interface at a bit-rate higher than the highest bit-rate of the segment files and the processing module honours the timing indicated by the PCR values by introducing silent periods during the injection. However, even though the timing is respected, the PCR values themselves are re-stamped with the actual injection time before leaving the processing module. It does not matter what the exact time is when this data is delivered in the transport stream interface but it must be delivered before the time indicated by the next PCR value. This delivery time-stamping is based on the module's PCR clock and the position in the stream. It does not matter that the processing module is time stamping an old PCR value from the IP stream because as far as the TV host is concerned this is the position of the clock reference in the output transport stream of the processor and not the input position as defined in the IP stream - the two positions (in PCR space) may be different. When switching between segments, older PCR values may be encountered in the processing module (by the parser). In this case it is necessary to continue feeding old data until a PCR value having a value which is greater than the current value of the module PCR clock.

According to other embodiments of the present invention, the CICAM further comprises a conditional access module and is configured to decrypt the media content should it be received by the processing module (CICAM) in encrypted format. The processing module then processes the decrypted content as in any of the above embodiments in order to properly transmit a transport stream to the host device consistent with the invention as described. The decryption is carried out according to any of the generally known techniques in use in the state of the art in the domain of digital pay-TV.

Figure 4 illustrates a system in which at least part of the goals of the present invention may be realised. However, this system does not strictly fall within the scope of the same invention as the embodiments previously described since it may require technical intervention on the host device. In the system presented in Figure 4, the regulation of the injection is achieved through flow control using feedback from the host device to the processing module (CICAM). The feedback is based on a measure of the amount of free space left in the host's video buffer i.e. the "fullness" of the video buffer. The same technique for pulling the content from the source is used as in any of the embodiments previously described, however the regulation method is different. As in the previous embodiments, the injection takes place at a bit-rate which is higher than the maximum bit-rate of the original segment files. This potentially could result in early filling of the host video buffer if the injection simply continued unchecked. Accordingly, when the host video buffer level crosses a high-level threshold the host provides feedback to the processor's transport stream injector indicating that the injection should stop. In this case the processor immediately stops sending data to the host. When the host video buffer level decreases below a low-level threshold, the host provides feedback to the injector indicating that injection should re-start (or start). According to this system, the host device's local PCR clock is set to a default value and default rate, which is used to govern the decoding of the video at the required rate.

**Claims**

1. A conditional access module (CICAM), the conditional access module (CICAM) being removably connectable to a host device (HOST) via a communication channel (CI+) comprising a transport stream interface, the conditional access module configured to inject a digital media transport stream (TS) into the host device (HOST), the conditional access module (CICAM) comprising:

   an IP interface (IPIN);
   a streaming module (HTTPASC) for receiving, via the IP interface (IPIN), at least one segment of digital content encoded according to an internet protocol, the segment comprising a plurality of data packets of the digital content;
   a parser (PRS) to parse the received segment; and
   a transport stream injector (TSINJ) to inject the transport stream (TS) comprising at least a subset of the data packets into the transport stream interface;

   **characterised in that**:

the streaming module (HTTPASC) is an adaptive streaming module for receiving the plurality of data packets of the digital content, wherein said plurality of data packets is encoded at one from a plurality of encoding bit-rates;

the parser (PRS) is configured to parse the received segment for at least one timing attribute associated with the subset of the data packets; and

the conditional access module (CICAM) further comprises a PCR clock (CIPCRC) for keeping track of a reference time and **in that** the transport stream injector (TSINJ) is configured to begin transmitting the subset of data packets at a time when the timing attribute corresponds to the reference time, the transmission being carried out at an injection bit-rate which is higher than any from the plurality of encoding bit-rates.

2. The conditional access module (CICAM) according to claim 1, wherein the IP interface (IPIN) is configured to receive the digital content encoded according to an internet protocol.

3. The conditional access module (CICAM) according to any of the preceding claims, wherein the transport stream injector (TSINJ) is configured to overwrite the timing attribute based on the reference time.

4. The conditional access module (CICAM) according to any of the preceding claims, wherein it further comprises an encryption module to encrypt the digital content.

5. The conditional access module (CICAM) according to any of the preceding claims, wherein the communication channel (CI+) is compliant with a CI-Plus or a DVB-CI Standard.

6. The conditional access module (CICAM) according to any of the preceding claims, wherein it is a PCMCIA compliant module.

7. The conditional access module (CICAM) according to any of the preceding claims, wherein the PCR clock is configured to operate at a frequency of 27MHz.

8. The conditional access module (CICAM) according to any of the preceding claims, wherein the digital media transport stream is compliant with an MPEG2 Standard.

9. A system comprising a conditional access module (CICAM) according to any of claims 1 to 8 and a host device (HOST) for receiving and decoding a digital media transport stream (TS), the host device (HOST) comprising a local PCR clock (HPCRC) configured to govern a rate of decoding of the digital media transport stream (TS), wherein the local PCR clock (HPCRC) is further configured to be adjusted using a PCR value in the transport stream (TS) when the transport stream (TS) comprises at least one PCR value.

10. The system according to claim 9, wherein the local PCR clock (HPCRC) is configured to be synchronised by the conditional access module PCR clock (CIPCRC).

11. A method for injecting a transport stream (TS) comprising a plurality of data packets into a transport stream interface using the conditional access module (CICAM) according to any one of the preceding claims, comprising:

parsing at least one segment of the content, the segment comprising a plurality of data packets of the content encoded at one from a plurality of encoding bit-rates, for at least one timing attribute, the timing attribute being associated with a subset from the plurality of data packets;

transmitting the subset of data packets, the transmission beginning at a time when the timing attribute corresponds to the reference time and at an injection bit-rate which is higher than any from the plurality of encoding bit-rates.

12. The method according to claim 11, wherein the parsing of the segment yields a plurality of timing attributes, each associated with a different subset of data packets, the method comprising:

for each one from the plurality of parsed timing attributes, beginning the transmission of its associated subset of data packets at a time based on a comparison between the timing attribute and the reference time and at an injection bit-rate which is higher than any from the plurality of encoding bit-rates.

13. The method according to either of claims 11 or 12, wherein the timing attribute is overwritten by a value based on the reference time before injecting the subset of data packets into the transport stream interface.

**Patentansprüche**

1. Zugangsberechtigungsmodul (CICAM), das ausbaubar mit einem Host-Gerät (HOST) über einen Nachrichtenübertragungskanal (CI+) verbindbar ist, mit einem Transport Stream Interface, wobei das Zugangsberechtigungsmodul konfiguriert ist, um einen digitalen Medientransportstrom (TS) in das Host-Gerät (HOST) einzuspeisen, wobei das Zugangsberechtigungsmodul (CICAM) folgendes aufweist:

    eine IP-Schnittstelle (IPIN);
    ein Streaming-Modul (HTTPASC) zum Empfang, über die IP-Schnittstelle (IPIN), mindestens eines Segments von digitalen Inhalten, die gemäß einem Internetprotokoll kodiert sind, wobei das Segment eine Vielzahl von Datenpaketen der digitalen Inhalte aufweist;
    einen Parser (PRS), um das empfangene Segment zu parsen; und
    einen Transportstrominjektor (TSINJ), um den Transportstrom (TS) mit mindestens einer Teilmenge der Datenpakete in das Transport Stream Interface einzuspeisen;

    **gekennzeichnet dadurch, dass:**

    das Streaming-Modul (HTTPASC) ein anpassungsfähiges Streaming-Modul zum Empfang der Vielzahl von Datenpaketen der digitalen Inhalte ist, wobei besagte Vielzahl von Datenpaketen mit einer aus einer Vielzahl von Verschlüsselungsbitraten kodiert ist;
    der Parser (PRS) konfiguriert ist, um das empfangene Segment für mindestens ein Timing-Attribut zu parsen, das mit der Teilmenge der Datenpakete verbunden ist; und
    das Zugangsberechtigungsmodul (CICAM) des weiteren eine PCR-Clock (CIPCRC) zum Verfolgen einer Bezugszeit umfasst, sowie dadurch, dass der Transportstrominjektor (TSINJ) konfiguriert ist, um mit der Übertragung der Teilmenge von Datenpaketen dann zu beginnen, wenn das Timing-Attribut der Bezugszeit entspricht, wobei die Übertragung bei einer Einspeisungsbitrate durchgeführt wird, die höher ist als jede von der Vielzahl von Verschlüsselungsbitraten.

2. Zugangsberechtigungsmodul (CICAM) nach Anspruch 1, wobei die IP-Schnittstelle (IPIN) konfiguriert ist, um die digitalen Inhalte zu empfangen, die gemäß einem Internetprotokoll kodiert sind.

3. Zugangsberechtigungsmodul (CICAM) nach einem beliebigen der vorherigen Patentansprüche, wobei der Transportstrominjektor (TSINJ) zum Überschreiben des Timing-Attributs auf der Grundlage der Bezugszeit konfiguriert ist.

4. Zugangsberechtigungsmodul (CICAM) nach einem beliebigen der vorherigen Patentansprüche, wobei es des weiteren ein Verschlüsselungsmodul umfasst, um die digitalen Inhalte zu verschlüsseln.

5. Zugangsberechtigungsmodul (CICAM) nach einem beliebigen der vorherigen Patentansprüche, wobei der Nachrichtenübertragungskanal (CI+) mit einem CI-Plus- oder DVB-CI-Standard kompatibel ist.

6. Zugangsberechtigungsmodul (CICAM) nach einem beliebigen der vorherigen Patentansprüche, wobei es ein PCMCIA-kompatibles Modul ist.

7. Zugangsberechtigungsmodul (CICAM) nach einem beliebigen der vorherigen Patentansprüche, wobei die PCR-Clock konfiguriert ist, um auf einer Frequenz von 27 MHz zu arbeiten.

8. Zugangsberechtigungsmodul (CICAM) nach einem beliebigen der vorherigen Patentansprüche, wobei der digitale Medientransportstrom kompatibel mit einem MPEG2-Standard ist.

9. System mit Zugangsberechtigungsmodul (CICAM) nach einem beliebigen der Ansprüche 1 bis 8 und einem Host-Gerät (HOST) zum Empfang und zur Dekodierung eines digitalen Medientransportstroms (TS), wobei das Host-Gerät (HOST) eine lokale PCR-Clock (HPCRC) umfasst, die konfiguriert ist, um eine Rate des Dekodierens des digitalen Medientransportstroms (TS) zu regeln, wobei die lokale PCR-Clock (HPCRC) des weiteren konfiguriert ist, um unter Verwendung eines PCR-Werts in dem Transportstrom (TS) eingestellt zu werden, wenn der Transportstrom (TS) mindestens einen PCR-Wert umfasst.

10. System nach Anspruch 9, wobei die lokale PCR-Clock (HPCRC) konfiguriert ist, um von der PCR-Clock des Zugangsberechtigungsmoduls (CIPCRC) synchronisiert zu werden.

**11.** Verfahren um einen Transportstrom (TS) mit einer Vielzahl von Datenpaketen in ein Transport Stream Interface einzuspeisen, unter Verwendung des Zugangsberechtigungsmoduls (CICAM) nach einem der vorigen Ansprüche, das folgendes umfasst:

Parsen mindestens eines Segment des Inhalts, wobei das Segment eine Vielzahl von Datenpaketen des Inhalts umfasst, die mit einer aus einer Vielzahl von Verschlüsselungsbitraten kodiert sind, für mindestens ein Timing-Attribut, wobei das Timing-Attribut mit einer Teilmenge aus der Vielzahl von Datenpaketen verbunden ist; Übertragung der Teilmenge von Datenpaketen, wobei die Übertragung dann beginnt, wenn das Timing-Attribut der Bezugszeit entspricht, und mit einer Einspeisungsbitrate, die höher ist als jede von der Vielzahl von Verschlüsselungsbitraten.

**12.** Verfahren nach Anspruch 11, wobei das Parsen des Segments eine Vielzahl von Timing-Attributen ergibt, jedes verbunden mit einer anderen Teilmenge von Datenpaketen, wobei das Verfahren folgendes umfasst:

für jedes von der Vielzahl von geparsten Timing-Attributen Beginn der Übertragung seiner dazugehörigen Teilmenge von Datenpaketen zu einem Zeitpunkt, der auf einem Vergleich zwischen dem Timing-Attribut und der Bezugszeit basiert, und mit einer Einspeisungsbitrate, die höher ist als jede von der Vielzahl von Verschlüsselungsbitraten.

**13.** Verfahren nach einem beliebigen der Ansprüche 11 oder 12, wobei das Timing-Attribut von einem Wert überschrieben wird, der auf der Bezugszeit vor dem Einspeisen der Teilmenge von Datenpaketen in das Transport Stream Interface basiert.

**Revendications**

**1.** Module d'accès conditionnel (CICAM), le module d'accès conditionnel (CICAM) étant connectable de façon amovible à un dispositif hôte (HOST) par un canal de communication (CI+) comprenant une interface de flux de transport, le module d'accès conditionnel étant configuré pour injecter un flux de transport de médias numériques (TS) dans le dispositif hôte (HOST), le module d'accès conditionnel (CICAM) comprenant:

une interface IP (IPIN);
un module de streaming (HTTPASC) pour recevoir, par l'interface IP (IPIN), au moins un segment de contenu numérique codé conformément à un protocole internet, le segment comprenant une pluralité de paquets de données du contenu numérique;
un parseur (PRS) pour analyser le segment reçu; et
un injecteur de flux de transport (TSINJ) pour injecter le flux de transport (TS),
comprenant au moins un sous-ensemble des paquets de données dans l'interface de flux de transport;
**caractérisé en ce que:**

le module de streaming (HTTPASC) est un module de streaming adaptatif pour recevoir la pluralité des paquets de données du contenu numérique, où ladite pluralité des paquets de données est codée à l'un d'une pluralité de débits binaires d'encodage;
le parseur (PRS) est configuré pour analyser le segment reçu pour au moins un attribut de chronométrage associé au sous-ensemble des paquets de données; et
le module d'accès conditionnel (CICAM) comprend en outre une horloge PCR (CIPCRC) pour suivre un temps de référence, et **en ce que** l'injecteur de flux de transport (TSINJ) est configuré pour commencer à transmettre le sous-ensemble des paquets de données à un moment où l'attribut de chronométrage correspond au temps de référence, la transmission étant effectuée à un débit binaire d'injection qui est supérieur à l'un quelconque de la pluralité de débits binaires d'encodage.

**2.** Module d'accès conditionnel (CICAM) selon la revendication 1, où l'interface IP (IPIN) est configurée pour recevoir le contenu numérique codé conformément à un protocole internet.

**3.** Module d'accès conditionnel (CICAM) selon l'une quelconque des revendications précédentes, où l'injecteur de flux de transport (TSINJ) est configuré pour écraser l'attribut de chronométrage basé sur le temps de référence.

**4.** Module d'accès conditionnel (CICAM) selon l'une quelconque des revendications précédentes, où il comprend aussi un module de cryptage pour crypter le contenu numérique.

5. Module d'accès conditionnel (CICAM) selon l'une quelconque des revendications précédentes, où le canal de communication (CI+) est conforme à un Standard CI-Plus ou DVB-CI.

6. Module d'accès conditionnel (CICAM) selon l'une quelconque des revendications précédentes, où ce module est un module conforme à PCMCIA.

7. Module d'accès conditionnel (CICAM) selon l'une quelconque des revendications précédentes, où l'horloge PCR est configurée pour opérer à une fréquence de 27MHz.

8. Module d'accès conditionnel (CICAM) selon l'une quelconque des revendications précédentes, où le flux de transport de médias numériques est conforme à un Standard MPEG2.

9. Système comprenant un module d'accès conditionnel (CICAM) selon l'une quelconque des revendications 1 à 8 et un dispositif hôte (HOST) pour recevoir et décoder un flux de transport de médias numériques (TS), le dispositif hôte (HOST) comprenant une horloge PCR locale (HPCRC) configurée pour régir un taux de décodage du flux de transport de médias numériques (TS), où l'horloge PCR locale (HPCRC) est configurée, de surcroît, pour être ajustée en utilisant une valeur PCR dans le flux de transport (TS) quand le flux de transport (TS) comprend au moins une valeur PCR.

10. Système selon la revendication 9, où l'horloge PCR locale (HPCRC) est configurée pour être synchronisée par l'horloge PCR du module d'accès conditionnel (CIPCRC).

11. Procédé pour injecter un flux de transport (TS) comprenant une pluralité de paquets de données dans une interface de flux de transport, en utilisant le module d'accès conditionnel (CICAM) selon l'une quelconque des revendications précédentes, comprenant:

   analyse d'au moins un segment du contenu, le segment comprenant une pluralité de paquets de données du contenu codé à l'un d'une pluralité de débits binaires d'encodage, pour au moins un attribut de chronométrage, l'attribut de chronométrage étant associé à un sous-ensemble de la pluralité des paquets de données; transmission du sous-ensemble de paquets de données, la transmission commençant à un moment où l'attribut de chronométrage correspond au temps de référence et à un débit binaire d'injection qui est supérieur à l'un quelconque de la pluralité des débits binaires d'encodage.

12. Procédé selon la revendication 11, où l'analyse du segment donne une pluralité d'attributs de chronométrage, chacun associé à un sous-ensemble différent de paquets de données, le procédé comprenant:

   pour chacun de la pluralité des attributs de chronométrage analysés, commencement de la transmission de son sous-ensemble associé de paquets de données à un temps basé sur une comparaison entre l'attribut de chronométrage et le temps de référence et à un débit binaire d'injection qui est supérieur à l'un quelconque de la pluralité des débits binaires d'encodage.

13. Procédé conformément à l'une des revendications 11 ou 12, où l'attribut de chronométrage est écrasé par une valeur basée sur le temps de référence avant d'injecter le sous-ensemble de paquets de données dans l'interface de flux de transport.

Figure 1

PCR(0)     PCR(n)     PCR(n+1)     PCR(n+2)

---- |  |  |  |  |  |  |  |  |  |  |  |  |  |  |  |  |  |  |  | ----

Index(0)     Index(n)     Index(n+1)     Index(n+2)

Figure 2

Bit-rate

Δt(n)          Δt(n+1)

Fr

PCR(0)          PCR(n)          PCR(n+1)          PCR(n+2)          t

Figure 3

Figure 4

**EP 2 640 082 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110019976 A1
- EP 2026558 A
- WO 2012029018 A1